# EUROPEAN PATENT APPLICATION

(11) **EP 4 633 084 A1**
(43) Date of publication of application: **15.10.2025**
(21) Application number: 23915023.8
(22) Date of filing: 28.12.2023
(51) Int. Cl.: H04L 9/32, H01M 10/42

(54) **BATTERY SYSTEM CONTROL APPARATUS AND OPERATING METHOD THEREOF**

(30) Priority: 04.01.2023 KR 20230001464
(71) Applicant: LG Energy Solution, Ltd., Seoul 07335 (KR)
(72) Inventor: PAEK, Seung Kyu, Daejeon 34122 (KR)
(74) Representative: Plasseraud IP
(86) International application number: PCT/KR2023/021914
(87) International publication number: WO 2024/147563

(57) **Abstract**

A battery system control apparatus according to an embodiment disclosed herein includes a communication circuit configured to allow one or more battery management systems (BMS) to communicate with a network switch connected to a network and a processor, in which the processor is configured to transmit a check signal to internal Internet protocol (IP) addresses allocatable at the network switch through the communication circuit, receive a response signal to the check signal from at least one internal IP address among the allocatable internal IP addresses, and generate a medium access control (MAC) address-identification information table by allocating a MAC address of a BMS, included in the response signal, to identification information.

## Description

### [TECHNICAL FIELD]

### CROSS-REFERENCE TO RELATED APPLICATION

This application claims priority to and the benefit of Korean Patent Application No. 10-2023-0001464 filed in the Korean Intellectual Property Office on January 4, 2023, the entire content of which is incorporated herein by reference.

### TECHNICAL FIELD

Embodiments disclosed herein relate to a battery system control apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

A battery management system (BMS) is one of services related to secondary batteries. The BMS may collect data regarding voltage, current, and temperature of the battery. The BMS may diagnose internal shortcircuit, over-voltage, temperature sensor failure, and other failures of the battery, based on collected measurement data.

A battery system controller (BSC) is an apparatus related to the BMS. The BSC may be an apparatus for managing a plurality of BMSs. The BSC may be a higher-level system of the BMS for managing a plurality of BMSs. The BSC may be associated with a power management system (PMS), an energy management system (EMS), a BMS, or a combination thereof.

### [DISCLOSURE]

### [TECHNICAL PROBLEM]

To control the plurality of BMSs, the BSC needs to check a position of each of the plurality of BMSs. The BSC may communicate with the plurality of BMSs based on an IP address list. The BSC may communicate with the plurality of BMSs by using a network switch based on a previously stored IP address list and a medium access control (MAC) address list of the BMS.

However, the IP address may be flexibly changed. For example, when power is turned off to repair the BMS, the IP address may be flexibly changed. Moreover, the MAC address of the BMS may also be changed. For example, when the BMS is replaced with a new BMS, the MAC address, which is a unique identifier, may also be changed. Thus, when the BSC uses an existing identification information-IP address table, it may be impossible for the BSC to communicate with the BMS once the IP address allocation of the network switch is changed.

Technical problems of the embodiments disclosed herein are not limited to the above-described technical problems, and other unmentioned technical problems would be clearly understood by one of ordinary skill in the art from the following description.

### [TECHNICAL SOLUTION]

A battery system control apparatus according to an embodiment disclosed herein includes a communication circuit configured to allow one or more battery management systems (BMS) to communicate with a network switch connected to a network and a processor, in which the processor is configured to transmit a check signal to internal Internet protocol (IP) addresses allocatable at the network switch through the communication circuit, receive a response signal to the check signal from at least one internal IP address among the allocatable internal IP addresses, and generate a medium access control (MAC) address-identification information table by allocating a MAC address of a BMS, included in the response signal, to identification information.

In an embodiment, the communication circuit may be further configured to receive a request signal for requesting communication with a second BMS from a first BMS, and the processor may be further configured to control to allow communication between the first BMS and the second BMS if a MAC address of the second BMS is included in the MAC address-identification information table.

In an embodiment, the communication circuit may be further configured to transmit a communication-unallowed message to the first BMS if the MAC address of the second BMS is not included in the MAC address-identification information table.

In an embodiment, the first BMS may be a battery system controller (BSC), and the battery system control apparatus may be included in the BSC.

The BSC may further include the network switch.

An operating method of a battery system control apparatus according to an embodiment disclosed herein includes transmitting a check signal to internal Internet protocol (IP) addresses allocatable at a network switch through a communication circuit configured to allow one or more battery management systems (BMS) to communicate with a network switch connected to a network, receiving a response signal to the check signal from at least one internal IP address among the allocatable internal IP addresses, and generating a medium access control (MAC) address-identification information table by allocating, by a processor, a MAC address of a BMS, included in the response signal, to identification information.

In an embodiment, the operating method of the battery system control apparatus may further include receiving, by the communication circuit, a request signal for requesting communication with a second BMS from a first BMS and controlling, by the processor, to allow communication between the first BMS and the second BMS if determining, by the processor, that a MAC address of the second BMS is included in the MAC address-identification information table.

In an embodiment, the operating method of the battery system control apparatus may further include transmitting, by the communication circuit, a communication-unallowed message to the first BMS if determining, by the processor, that the MAC address of the second BMS is not included in the MAC address-identification information table.

In an embodiment, the first BMS may be a battery system controller (BSC), and the battery system control apparatus may be included in the BSC.

In an embodiment, the BSC may further include the network switch.

### [ADVANTAGEOUS EFFECTS]

A battery system control apparatus and an operating method thereof according to various embodiments disclosed herein may control a BSC and BMSs by using a MAC address-identification information table based on a MAC address and identification information of the BMS. Thus, the battery system control apparatus and the operating method thereof may control communication based on the MAC address that does not change even if the IP address is flexibly changed due to replacement of the BMS, etc.

The effects of the battery system control apparatus and the operating method thereof according to the disclosure of the present document are not limited to the effects mentioned above, and other effects not mentioned will be clearly understood by those of ordinary skill in the art according to the disclosure of the present document.

### [DESCRIPTION OF DRAWINGS]

FIG. 1 is a block diagram of a communication system according to an embodiment of the present disclosure.
FIG. 2 is a block diagram of a battery system control apparatus according to an embodiment of the present disclosure.
FIG. 3 illustrates a MAC address-identification information table according to an embodiment of the present disclosure.
FIG. 4 illustrates an updated MAC address-identification information table according to an embodiment of the present disclosure.
FIG. 5 is a flowchart showing a method of generating a MAC address-identification information table according to an embodiment of the present disclosure.
FIG. 6 is a flowchart showing a method of controlling communication between a first BMS and a second BMS based on a MAC address-identification information table, according to an embodiment of the present disclosure.

With regard to the description of the drawings, similar reference numerals may be used to refer to similar or related components.

### [MODE FOR INVENTION]

Hereinafter, embodiments of the present disclosure will be described with reference to the accompanying drawings. However, the description is not intended to limit the present disclosure to particular embodiments, and it should be construed as including various modifications, equivalents, and/or alternatives according to the embodiments of the present disclosure.

It should be appreciated that embodiments of the present document and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly or wirelessly), or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the multiple entities may be separately disposed in different components. According to various embodiments disclosed herein, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

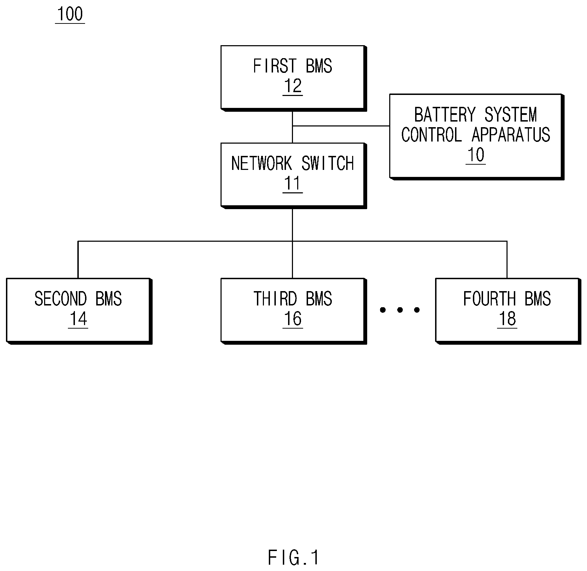

FIG. 1 is a block diagram of a communication system 100 according to an embodiment of the present disclosure.

Referring to FIG. 1, the communication system 100 may include a battery system control apparatus 10, a network switch 11, a plurality of BMSs 12, 14, 16, and 18, or a combination thereof.

The first BMS 12 may exchange data with the second through fourth BMSs 14, 16, and 18 through mutual communication. The first BMS 12 may exchange data with the second through fourth BMSs 14, 16, and 18 through mutual communication, by using the network switch 11.

In an embodiment, the first BMS 12 may be a battery system controller (BSC).

While it is shown in FIG. 1 that the first BMS 12, the battery system control apparatus 10, and the network switch 11 are separate components, they are merely examples. In an embodiment, at least two of the first BMS 12, the battery system control apparatus 10, or the network switch 11 may be implemented as one device. For example, the battery system control apparatus 10 and the network switch 11 may be implemented as one device. In another example, the first BMS 12, the battery system control apparatus 10, and the network switch 11 may be implemented as one device.

Herein, the network switch may be a network device connecting a network line with BMSs. The network switch may allow communication among BMSs. The BMS may diagnose internal shortcircuit, over-voltage, temperature sensor failure, and other failures of the battery, based on measurement data regarding the voltage, current, and temperature of the battery.

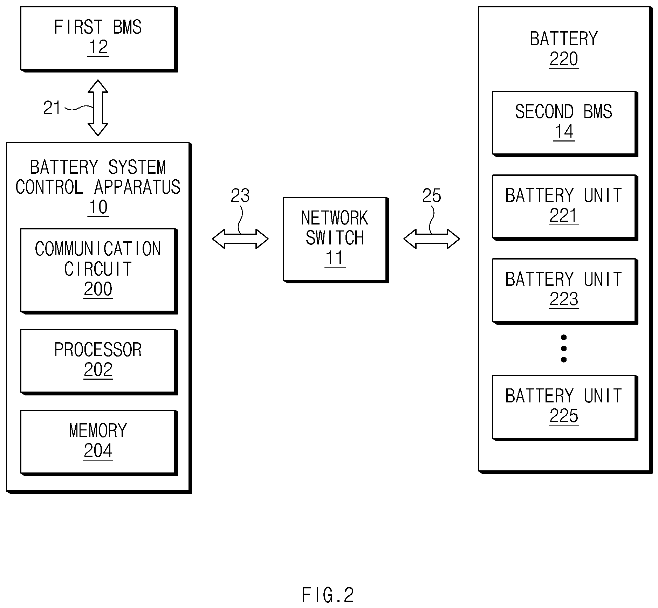

FIG. 2 is a block diagram of the battery system control apparatus 10 according to an embodiment of the present disclosure. Although a battery 220 including the second BMS 14 among the second to fourth BMSs 14, 16, and 18 is shown in FIG. 2, batteries including other BMSs are not excluded.

Referring to FIG. 2, the first BMS 12 may be wiredly and/or wirelessly connected to the battery system control apparatus 10. The network switch 11 may be wiredly and/or wirelessly connected to the battery system control apparatus 10 and the second BMS 14.

In an embodiment, connection 21 between the first BMS 12 and the battery system control apparatus 10, connection 23 between the network switch 11 and the battery system control apparatus 10, and connection 25 between the network switch 11 and the second BMS 14 may be communication connection through a wired and/or wireless network. In an embodiment, the wired network may be based on a local area network (LAN) communication or a power-line communication. In an embodiment, the wireless network may be based on a short-range communication network (e.g., Bluetooth, Wireless Fidelity (WiFi), or Infrared Data Association (IrDA)).

In another embodiment, the connection 21 between the first BMS 12 and the battery system control apparatus 10, the connection 23 between the network switch 11 and the battery system control apparatus 10, and the connection 25 between the network switch 11 and the second BMS 14 may be connection using a device-to-device communication scheme (e.g., a bus, a general-purpose input and output (GPIO), a serial peripheral interface (SPI), or a mobile industry processor interface (MIPI)).

In an embodiment, the battery 220 may include the second BMS 14 and battery units 221, 223, and 225. Herein, each of the one or more battery units 221, 223, and 225 may be a battery cell, a battery module, a battery pack, or a battery rack.

In an embodiment, the battery system control apparatus 10 may include a communication circuit 200, a processor 202, and a memory 204. According to an embodiment, the battery system control apparatus 10 shown in FIG. 2 may further include at least one component (e.g., a display, an input device, or an output device) in addition to components shown in FIG. 2.

In an embodiment, the communication circuit 200 may establish a wired communication channel and/or a wireless communication channel between the battery system control apparatus 10 and the network switch 11, and transmit and receive data to and from the BMSs 14, 16, and 18 of the plurality of batteries through the network switch 11 based on the established communication channel. Herein, the plurality of batteries may include a BMS, a power management system (PMS), an energy management system (EMS), or a combination thereof.

In an embodiment, the memory 204 may include a volatile and/or a nonvolatile memory.

In an embodiment, the memory 204 may store data used by at least one component (e.g., the processor 202) of the battery system control apparatus 10. For example, the data may include software (or an instruction related thereto), input data, or output data. In an embodiment, the instruction, when executed by the processor 202, may cause the battery system control apparatus 10 to perform operations defined by the instruction.

In an embodiment, the processor 202 may include a central processing unit, an application processor, a graphic processing unit, a neural processing unit (NPU), an image signal processor, a sensor hub processor, or a communication processor.

In an embodiment, the processor 202 may execute software to control at least one other component (e.g., a hardware or software component) of the battery system control apparatus 10 connected to the processor 202 and may process or compute various data.

The battery system control apparatus 10 may control communication between the first BMS 12 and the BMSs 14, 16, and 18 through the communication circuit 200 and the processor 202.

Hereinbelow, a description will be made of a method, performed by the battery system control apparatus 10, of generating and updating an MAC address-identification information table and controlling communication with the BMSs through the communication circuit 200 and the processor 202.

### Generation of MAC Address-Identification Information Table

The network switch 11 may allocate an internal IP address to connected devices. Herein, the devices connected via the network may include a BMS, a PMS, an EMS, or a combination thereof. Hereinbelow, a description will be made assuming that the devices connected via the network are the plurality of BMSs.

The communication circuit 200 may communicate with the BMSs 12, 14, 16, and 18 connected via the network. The communication circuit 200 may communicate with the BMSs 12, 14, 16, and 18 connected via the network through the network switch 11.

The processor 202 may generate a command for transmission/reception. The processor 202 may generate a command for transmitting a check signal. The processor 202 may generate a command for transmitting a check signal to the internal IP addresses allocatable at the network switch 11. The processor 202 may generate a command for transmitting a check signal and delivering the same to the communication circuit 200.

The communication circuit 200 may transmit the check signal for checking the MAC address. The communication circuit 200 may transmit the check signal for checking the MAC address based on the command of the processor 202. The communication circuit 200 may transmit the check signal to the internal IP addresses (e.g., 10.0.0.0/8, 172.16.0.0/12, 192.168.0.0/16). The communication circuit 200 may transmit a check signal to the internal IP addresses allocatable at the network switch 11. The communication circuit 200 may transmit a check signal to the internal IP addresses allocatable at the network switch 11, based on the command of the processor 202.

The communication circuit 200 may receive a response signal to the check signal. The communication circuit 200 may receive a response signal to the check signal from at least one internal IP address. The communication circuit 200 may receive a response signal to the check signal from a battery having allocated thereto a random internal IP address. The communication circuit 200 may receive a response signal to the check signal from a battery having allocated thereto a random internal IP address among allocatable internal IP addresses.

The processor 202 may generate an MAC address-identification information table. The processor 202 may generate the MAC address-identification information table based on the response signal received through the communication circuit 200. The processor 202 may generate the MAC address-identification information table in which the MAC address of the BMS included in the response signal is allocated to the designated identification information. The processor 202 may generate the MAC address-identification information table and store the same in the memory 204.

### Updating of MAC Address-Identification Information Table

In an embodiment, the processor 202 may update the MAC address-identification information table. The processor 202 may update the MAC address-identification information table by allocating the MAC address included in the response signal to new identification information. The processor 202 may update the MAC address-identification information table by further allocating a new MAC address to new identification information if there is a new MAC address not included in the MAC address-identification information table among MAC addresses of the BMS, included in the response signal. The processor 202 may update the MAC address-identification information table and store the same in the memory 204.

In another embodiment, the processor 202 may receive the updated MAC address-identification information table including the new MAC address. The processor 202 may receive the updated MAC address-identification information table through the communication circuit 200. The processor 202 may store the updated MAC address-identification information table in the memory 204. The processor 202 may receive the updated MAC address-identification information table through the communication circuit 200 and store the same in the memory 204. Herein, the updated MAC address-identification information table may be a table updated by a setter.

### Control of Communication with BMSs

The communication circuit 200 may receive a request signal for requesting communication with the BMSs. The communication circuit 200 may receive a request signal for requesting communication with the second BMS 14 from the first BMS 12. Herein, the request signal may include the MAC address of the second BMS 14. Hereinbelow, a description will be made assuming that the first BMS 12 is a BMS requesting communication and the second BMS 14 is a request-target BMS.

The processor 202 may check the MAC address of the second BMS 14 based on the request signal. The processor 202 may check the MAC address of the second BMS 14 based on the request signal received through the communication circuit 200. The processor 202 may check whether the MAC address of the second BMS 14 included in the request signal is included in the MAC address-identification information table.

The processor 202 may control to allow communication among the BMSs. The controller 202 may also control to allow communication between the first BMS 12 and the second BMS 14. The controller 202 may control to allow communication between the first BMS 12 and the second BMS 14, if the MAC address of the second BMS 14 is included in the MAC address-identification information table.

The processor 202 may generate a command for transmitting a communication-unallowed message. The processor 202 may generate the command for transmitting the communication-unallowed message, if the MAC address of the second BMS 14 is not included in the MAC address-identification information table. The processor 202 may generate the command for transmitting the communication-unallowed message and deliver the command to the communication circuit 200, if the response signal including the MAC address of the first BMS 14 is not identified.

The communication circuit 200 may transmit the message to the BMS. The communication circuit 200 may transmit the message to the BMS, based on the command of the processor 202. The processor 200 may transmit the message to the first BMS 12, if the MAC address of the second BMS 14 is not included in the MAC address-identification information table. The communication circuit 200 may transmit the communication-unallowed message to the first BMS, 12 based on the command of the processor 202 for transmitting the communication-unallowed message. The processor 200 may transmit the communication-unallowed message to the first BMS 12 based on the command of the processor 202 for transmitting the communication-unallowed message, if the MAC address of the second BMS 14 is not included in the MAC address-identification information table.

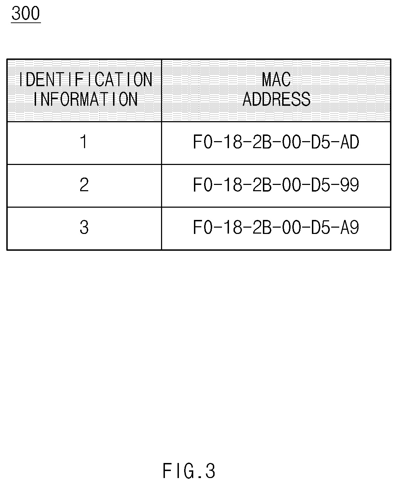

FIG. 3 illustrates a MAC address-identification information table 300 according to an embodiment of the present disclosure.

Referring to FIG. 3, the MAC address-identification information table 300 may be a table in which each of MAC addresses is allocated to designated identification information.

Referring to FIG. 3, the MAC address-identification information table 300 may include identification information and a MAC address for each of the BMSs.

The processor 202 may check whether the MAC address of the second BMS 14 is included in the MAC address-identification information table 300, if the first BMS 12 requests communication to the second BMS 14.

For example, the processor 202 may check whether the MAC address of the second BMS 14 is included in the MAC address-identification information table 300, if the MAC address of the second BMS 14 is F0-18-2B-00-D5-99. In this case, the processor 202 may control to allow communication between the first BMS 12 and the second BMS 14. On the other hand, the processor 202 may determine that the MAC address of the second BMS 14 is not included in the MAC address-identification information table 300, if the MAC address of the second BMS 14 is F0-18-2B-00-D5-22. In this case, the communication circuit 200 may transmit the communication-unallowed message to the first BMS 12 based on the command of the processor 202 for transmitting the communication-unallowed message. The processor 200 may transmit the communication-unallowed message to the first BMS 12 based on the command of the processor 202 for transmitting the communication-unallowed message, if the MAC address of the second BMS 14 is not included in the MAC address-identification information table.

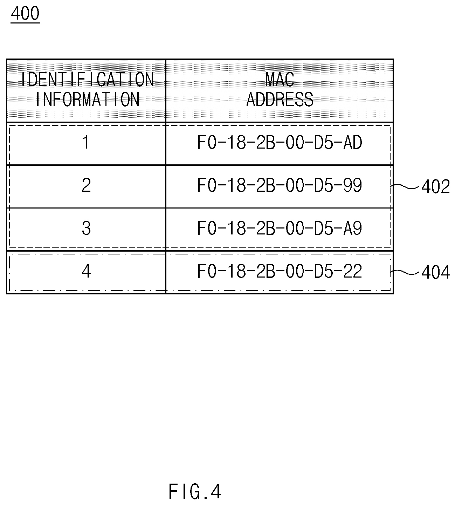

FIG. 4 illustrates an updated MAC address-identification information table 400 according to an embodiment of the present disclosure.

Referring to FIG. 4, the updated MAC address-identification information table 400 may include a previously generated table 402 and a new table 404. Herein, the previously generated table 402 may be a table generated by the processor 202.

In another embodiment, the processor 202 may allocate a new MAC address to new identification information. The processor 202 may allocate the new MAC address to the new identification information, if there is a new MAC address not included in the previously generated table 402 among the MAC addresses of the BMS, included in the response signal. The processor 202 may generate the new table 404 in which the new MAC address is allocated to the new identification information. The processor 202 may generate the updated MAC address-identification information table 400 including the new table 404 in the previously generated table 402.

In another embodiment, the new table 404 may be set by a setter. The processor 202 may receive the new table 404 set by the setter through the communication circuit 200. The processor 202 may generate the updated MAC address-identification information table 400 including the new table 404 in the previously set table 402. The processor 202 may receive the MAC address-identification information 404 updated by the setter through the communication circuit 200. The processor 202 may store the updated MAC address-identification information table 404 in the memory 204.

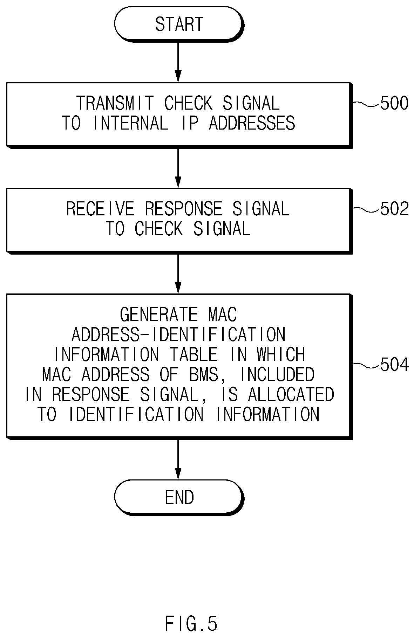

FIG. 5 is a flowchart showing a method of generating the MAC address-identification information table 300 according to an embodiment of the present disclosure.

Referring to FIG. 5, in operation 500, the communication circuit 200 may transmit the check signal for checking the MAC address. The communication circuit 200 may transmit the check signal for checking the MAC address based on the command of the processor 202. The communication circuit 200 may transmit the check signal to the internal IP addresses. The communication circuit 200 may transmit a check signal to the internal IP addresses allocatable at the network switch 11. The communication circuit 200 may transmit a check signal to the internal IP addresses allocatable at the network switch 11, based on the command of the processor 202.

In operation 502, the communication circuit 200 may receive the response signal to the check signal. The communication circuit 200 may receive a response signal to the check signal from at least one internal IP address. The communication circuit 200 may receive the response signal to the check signal from at least one internal IP address among the allocatable internal IP addresses.

In operation 504, the processor 202 may generate the MAC address-identification information table. The processor 202 may generate the MAC address-identification information table based on the response signal received through the communication circuit 200. The processor 202 may generate the MAC address-identification information table in which the MAC address of the BMS included in the response signal is allocated to the designated identification information. The processor 202 may generate the MAC address-identification information table and store the same in the memory 204.

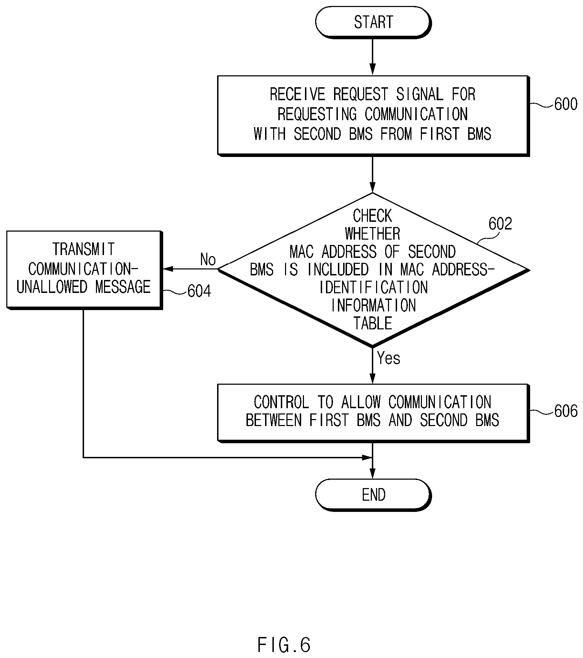

FIG. 6 is a flowchart showing a method of controlling communication between the battery system control apparatus 10 and the first BMS 14 based on the MAC address-identification information table 300, according to an embodiment of the present disclosure.

Referring to FIG. 6, in operation 600, the communication circuit 200 may receive the request signal for requesting communication among the BMSs. The communication circuit 200 may receive a request signal for requesting communication with the second BMS 14 from the first BMS 12.

In operation 602, the processor 202 may check the MAC address of the second BMS 14 based on the request signal. The processor 202 may check the MAC address of the second BMS 14 based on the request signal received through the communication circuit 200. The processor 202 may check whether the MAC address of the second BMS 14 included in the request signal is included in the MAC address-identification information table.

In operation 604, The processor 202 may generate a command for transmitting a communication-unallowed message. The processor 202 may generate the command for transmitting the communication-unallowed message, if the MAC address of the second BMS 14 is not included in the MAC address-identification information table. The processor 202 may generate the command for transmitting the communication-unallowed message and deliver the command to the communication circuit 200, if the response signal including the MAC address of the first BMS 14 is not identified.

The communication circuit 200 may transmit the message to the BMS. The communication circuit 200 may transmit the message to the BMS, based on the command of the processor 202. The processor 200 may transmit the message to the first BMS 12, if the MAC address of the second BMS 14 is not included in the MAC address-identification information table. The communication circuit 200 may transmit the communication-unallowed message to the first BMS, 12 based on the command of the processor 202 for transmitting the communication-unallowed message. The processor 200 may transmit the communication-unallowed message to the first BMS 12 based on the command of the processor 202 for transmitting the communication-unallowed message, if the MAC address of the second BMS 14 is not included in the MAC address-identification information table.

In operation 606, The processor 202 may control to allow communication among the BMSs. The controller 202 may also control to allow communication between the first BMS 12 and the second BMS 14. The controller 202 may control to allow communication between the first BMS 12 and the second BMS 14, if the MAC address of the second BMS 14 is included in the MAC address-identification information table.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present document.

## Claims

1. A battery system control apparatus comprising:
a communication circuit configured to allow one or more battery management systems (BMS) to communicate with a network switch connected to a network; and
a processor,
wherein the processor is configured to:
transmit a check signal to internal Internet protocol (IP) addresses allocatable at the network switch through the communication circuit;
receive a response signal to the check signal from at least one internal IP address among the allocatable internal IP addresses; and
generate a medium access control (MAC) address-identification information table by allocating a MAC address of a BMS, included in the response signal, to identification information.

2. The battery system control apparatus of claim 1, wherein the communication circuit is further configured to receive a request signal for requesting communication with a second BMS from a first BMS, and the processor is further configured to control to allow communication between the first BMS and the second BMS if a MAC address of the second BMS is included in the MAC address-identification information table.

3. The battery system control apparatus of claim 2, wherein the communication circuit is further configured to transmit a communication-unallowed message to the first BMS if the MAC address of the second BMS is not included in the MAC address-identification information table.

4. The battery system control apparatus of claim 2, wherein the first BMS is a battery system controller (BSC), and the battery system control apparatus is included in the BSC.

5. The battery system control apparatus of claim 4, wherein the BSC further comprises the network switch.

6. An operating method of a battery system control apparatus, the operating method comprising:
transmitting a check signal to internal Internet protocol (IP) addresses allocatable at a network switch through a communication circuit configured to allow one or more battery management systems (BMS) to communicate with a network switch connected to a network;
receiving a response signal to the check signal from at least one internal IP address among the allocatable internal IP addresses; and
generating a medium access control (MAC) address-identification information table by allocating, by a processor, a MAC address of a BMS, included in the response signal, to identification information.

7. The operating method of claim 6, further comprising:
receiving, by the communication circuit, a request signal for requesting communication with a second BMS from a first BMS; and
controlling, by the processor, to allow communication between the first BMS and the second BMS if determining, by the processor, that a MAC address of the second BMS is included in the MAC address-identification information table.

8. The operating method of claim 7, further comprising transmitting, by the communication circuit, a communication-unallowed message to the first BMS if determining, by the processor, that the MAC address of the second BMS is not included in the MAC address-identification information table.

9. The operating method of claim 7, wherein the first BMS is a battery system controller (BSC), and the battery system control apparatus is included in the BSC.

10. The operating method of claim 9, wherein the BSC further comprises the network switch.
